# EUROPEAN PATENT APPLICATION

(11) **EP 1 475 544 A1**
(43) Date of publication of application: **10.11.2004**
(21) Application number: 03398003.8
(22) Date of filing: 09.05.2003
(51) Int. Cl.: F16B 7/04, F16B 7/18

(54) **Multiple elongated tubular elements connection joint**

(71) Applicant: Fernandes, Joaquim Antonio, 2400-13 Leiria (PT)
(72) Inventor: Fernandes, Joaquim Antonio, 2400-13 Leira (PT)
(74) Representative: Pereira da Cruz, Joao

(57) **Abstract**

The present invention concerns a multiple elongated tubular elements connection joint, more particularly a connection joint for multiple elongated tubular elements where the elongated tubular elements can be connected with angular variation. With this new method of linkage it is possible to interconnect elongated tubular elements of equal or different sections, thus forming different angles, permitting the formation of any type of structure, such as parallelepiped structures for stands, trapezoidal structures, for platform supports, etc., without the need for welding or any other type of visible connection.

The multiple tubular elongated elements interconnecting angular connection joint is characterized by being constituted by a base body 1 that contains in its interior a rotation axle 2 for one to three fixation elements 3 and, on the exterior, one, two or three openings for the connection of these fixation elements 3 to threaded pins 4 that, in turn, connect to elongated tubular elements 9 by a set of expansions rings 7.

## Description

The present invention concerns a multiple elongated tubular elements connection joint, more particularly a connection joint for multiple elongated tubular elements where the elongated tubular elements can be connected with angular variation. With this new method of linkage it is possible to interconnect elongated tubular elements of equal or different sections, thus forming different angles, permitting the formation of any type of structure, such as parallelepiped structures for stands, trapezoidal structures, for platform supports, etc., without the need for welding or any other type of visible connection.

### Background to the invention

In the prior art several types of tubular elongated element joints are known. Amongst them we can find the documents EP 0 053 582, EP 0 062 358, FR 1.278.327, FR 1.186.396 and US 4.884.915.

The document EP 0 053 582, "Module construction system consisting of joints and coupling rods for tridimensional reticulated structures" concerns the assembly of coupling rods, each one having a connection joint at the end, between two spherical sections, which, through a series of openings, permit the introduction of the coupling rods and their layout in different directions, blocking them afterwards with a single central screw. In order to avoid the fixation elements being submitted to traction, the exterior surface of said section presents some ribs. As regards the section, the connection joints are lodged in extensions which allow the rotation of the coupling rods around the socket joint after blockage.

The document EP 0 072 358 concerns an assembly socket joint for tubular bookshelf elements, which is suitable for being introduced and blocked inside and in the proximity of the ends of the horizontal cross ties of the bookshelf and which presents a fixation screw that slides axially and is designed to be introduced and immobilized in appropriate openings that are already found on the bookshelves.

The patent FR 1.278.327 concerns a socket joint namely for the assembly of plasticized pipes, characterized by consisting of a threaded coupling rod having at least one expansion ring placed at each end of the pipe to be assembled. The above mentioned ring cooperates with the interior surface of the pipe wall, for assembly purposes, which allows the connection of the pipes without damaging their exterior surface. The socket joint consists of a base body where the connecting pipes are fitted together. The threaded coupling rod will go through the base body and cooperate with conic nuts that ensure the expansion of the expansion rings. In the central part of the base body a hole is formed to ease its rotation, which will in turn help rotate the threaded coupling rod and tighten the conic nuts. The central part of the base body is covered by a sheath to ensure the continuity of the covering between the two pipes. The threaded coupling rod and the hollow interior area of the base body present the same section, for example a square section, in order to be able to move in an independent manner. In a particular embodiment of the invention, the socket joint only includes a single expansion ring. The opposite end of this ring is coiled on a die-shaped part that presents several threaded holes, allowing various assembly forms.

The patent FR 1.186.396 has as its subject matter an axial junction device for tubular construction or cylindrical lodging parts, consisting of an axle where three cylindrical elements are introduced. This set of components is then placed in the pipe or in the equivalent support and fixed by means of forced radial displacement of the cylindrical element situated between the other two, thus blocking the three elements against the internal wall of the pipe, and two of those elements are then tightened against that wall opposite of the third element, said displacement movement being obtained by means of some kind of system, such as a screw, which tightens the axle through a threaded radial hole formed in the element to be displaced. The part of the axle that passes to the outside of the pipe may have similar fixation means or any other kind of system designed to connect any of the parts.

The patent US 4 884 915 concerns a connection device mainly for scaffolding or stand systems, such as displays and the like, constituted by pipes. The connecting device is a socket joint where one or more pipes are attached, and where one of the ends of each of these pipes will cooperate with the connecting device. Each one of the pipes has a rod that includes a T-shaped end and will cooperate with a connecting element that presents preferably a substantial spherical form. The connecting device has a fixation element, very similar to a sleeve, which is inserted in the interior of the pipe and includes inner buffers that work together with some buffers located in the rod, so that the rod, without any axial displacement movement, can rotate around the axial direction in relation to the sleeve in a predefined way, but substantially not in the opposite direction.

The socket joints of the prior art present a different constitution and functioning from the connection joint of the present invention.

### Summary of the invention

The present invention has as its main objective a sphere-type joint for tubular elongated elements that presents great simplicity, efficiency, robustness and easy assemble, as well as the possibility of tubular elongated element layouts in different angular positions.

The connection joint of the invention is constituted by a base body having in is interior a rotation axle to receive 1 or 3 fixation elements which, by means of a threaded pin, a set of expansion rings and two nuts, can be fixed to the interior of a tubular elongated element. Therefore, it has a very simple composition, a base body, fixation elements, threaded pins and fixation means such as rings and two nuts, which guarantee great robustness and efficiency.

### Brief description of the drawings

The description that follows will be better understood with the aid of the attached drawings, where:
Figure 1 represents an elevation of the connection joint of the invention with three fixation elements;
Figure 2 represents a plane view of the connection joint of the previous figure;
Figure 3 represents an elevation of the connection joint with two fixation elements at a straight angle for the connection of two elongated tubular elements.

### Detailed description of the invention

As may be observed in the drawings, the connection joint of the invention is constituted by a base body 1 that contains in its interior a rotation axle 2 for one to three fixation elements 3 and, emerging on its exterior surface, one, two or three passage openings to allow the assembly of the fixation elements 3 to the axle 2 (in the drawings only two and three openings are represented). One of the ends of said fixation elements 3 is bent in the form of a hook forming an eye 5 that embraces the rotation axle 2, the opposite end being formed by a threaded coupling rod 6 that is connected to a pin 4. In turn, the said pins 4 are of the sleeve type, with an interior thread for connection to the fixation elements 3, and with an exterior thread in the part that, after the connection to said fixation element 3, will remain in the exterior of the base body 1. On this exterior thread, the fixation elements are attached to the elongated tubular elements, as described below.

The abovementioned passage openings can be effected on base body 1 forming angles amongst themselves. Furthermore, the above openings with sufficient dimension to allow the introduction of the eye 5 in the interior of the base body, allow an angle variation amplitude of the rod 6 which, when adequately fixed to the elongated tubular elements, will allow them to be connected in the required angular position.

After the placement of the fixation elements 3 in the interior of base body 1 through the abovementioned openings, axle 2 is introduced through diametrically opposed holes previously made on base body 1, passing through the eyes 5 which are defined by the extremities, bent in the form of a hook, of the fixation elements 3. The assembly holes of axle 2 are covered afterwards.

The fixation pins 4, by means of a set of expansion rings 7, fixed by two nuts 8, will allow the connection thereof to elongated tubular elements 9. As may be observed, said rings 7 are preferably formed by a flat part 10 and by rims that are displayed peripherically, like petals, with a slight inclination.

The connection to elongated tubular elements is realized by the introduction of the set of rings 7 in the interior of the elongated tubular elements 9 and by the tightening of the set by the nuts 8 which, when flattened by the tightening of the nuts, will expand, driving into the elongated tubular element walls 9. For this purpose, said rings 7 have a diameter slightly smaller than the interior diameter of the elongated tubular elements, preferably less than 1 mm.

The mechanical rigidity is ensured by the combination of the pressure exerted by the expansion rings 7 on the interior walls of the elongated tubular elements 9 and by the pressure from the base body 1 in contact with the top part of the tubular elongated element 9.

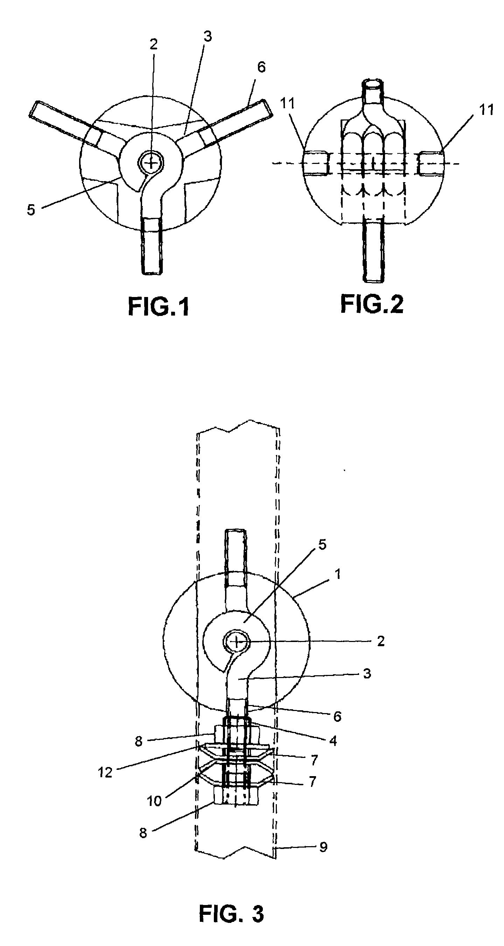

As may be observed, it is possible to connect two or more tubular elongated tubular elements forming angles amongst themselves. This way, figure 3 represents a connection joint suitable to connect two elongated tubular elements with an angular layout, in this particular case forming a right angle. It can easily be deduced that this connection joint allows the coupling of one to three tubular elements in a wide angle position, from aligned tubular elements to tubular elements at a right angle.

The said base body 1 may also have two other circular openings 11 for the connection of one or two other pins 13, which will be arranged perpendicularly to axle 2 and without any angular layout, i.e. they are fixed.

As may be observed in figure 3, the fixation means are constituted by three expansion rings 7, by two nuts 8 and a flat ring 12. Said rings 7 are placed in pin 4, in such a way that the two rings closest to the base body 1 remain with the peripheral borders of the diverging petals and the flat parts 10 against each other, and the ring which is furthest from the base body 1 remains with the border of its petals against the adjacent ring. Between the nut closest to the base body and ring 7 another flat circular ring 12 is found. In order to ensure the clamping of this set of parts against the interior wall of the pipe, the exterior nut 8 is coiled on pin 4.

With the connection joint of the invention, it is possible to form any kind of parallelepiped structure, for example a structure of a stand, or trapezoidal structures, such as a structure to support a platform or cover.

## Claims

1. Multiple tubular elongated elements interconnecting angular connection joint of the type that uses fixation means in the interior of tubular elongated elements, **characterized by** being constituted by a base body 1 that contains in its interior a rotation axle 2 for one to three fixation elements 3 and, on the exterior, one, two or three openings for the connection of these fixation elements 3 to threaded pins 4 that, in turn, connect to elongated tubular elements 9 by a set of expansions rings 7.

2. Multiple tubular elongated elements interconnecting angular connection joint, according to the previous claim, **characterized by** said fixation elements 3 having one end bent in the form of a hook 5 that forms an eye that embraces the rotation axle 2, the opposite end being formed by a threaded rod 6 that is connected to a pin 4.

3. Multiple tubular elongated element interconnecting angular connection joint according to claim 1, **characterized by** said pins 4 being of the sleeve type, with an interior thread to connect to the fixation elements 3, and with an exterior thread in the part that, after connection to said fixation element 3, remains in the exterior of the base body 1.

4. Multiple tubular elongated elements interconnecting angular connection joint according to the previous claim, **characterized by** the fact that in said exterior thread of the pin 4 the fixation elements are attached to the elongated tubular elements constituted by the rings 7 that are inserted in the interior of the elongated tubular elements 9 and by two clamping nuts 8 which, as they are tightened when the set of rings is in the interior of the elongated tubular elements, will expand the rings and drive them into the interior walls of said tubular elongated tubular elements.

5. Multiple tubular elongated element interconnecting angular connection joint, according to the previous claim, **characterized by** said rings 7 having a diameter slightly smaller than the interior diameter of the tubular elongated tubular elements, preferably 1 mm less.

6. Multiple tubular elongated elements interconnecting angular connection joint, according to the previous claim, **characterized by** said base body 1 also being able to have two other circular openings 11 to connect to one or two other pins 13, which will be arranged perpendicularly to axle 2 and without any possibility of any angular layout, i.e. they are fixed.
